(19) **Europäisches Patentamt / European Patent Office / Office européen des brevets**

(11) **EP 4 393 314 A1**

(12) **EUROPEAN PATENT APPLICATION**

(43) Date of publication:
**03.07.2024 Bulletin 2024/27**

(21) Application number: **22217246.2**

(22) Date of filing: **30.12.2022**

(51) International Patent Classification (IPC):
**A23G 3/28** (2006.01)  **A21D 13/24** (2017.01)
**A23G 3/34** (2006.01)  **A23P 20/18** (2016.01)

(52) Cooperative Patent Classification (CPC):
(C-Sets available)
**A23G 3/28; A21D 13/24; A21D 13/47; A23G 1/54;
A23G 3/0095; A23G 3/0097; A23G 3/54;
A23P 20/18;** A23G 1/305; A23G 3/343  (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 TR 202220368**

(71) Applicant: **Eti Gida Sanayi Ve Ticaret Anonim Sirketi
26110 Eskisehir (TR)**

(72) Inventor: **Görgülü, Ahmet
ESKISEHIR (TR)**

(74) Representative: **Yamankaradeniz, Kemal
Destek Patent Inc.
Maslak Mah.,
Büyükdere Cad., No: 243,
Kat: 13, Spine Tower, Sariyer,
34485 Istanbul (TR)**

(54) **METHOD FOR DECOR APPLICATION TO FOOD PRODUCTS**

(57) Method of the invention is the feeling of the desired aroma locally and in high doses as a result of application of high aroma inputs and inputs where aroma loss is not desired, onto surfaces of food products (r). As all surfaces of particulates (u) are mixed and coated with decor food products (v), contact with air is stopped fully and aroma loss and oxidization is prevented.

Figure 3

**(Cont. next page)**

(52) Cooperative Patent Classification (CPC): (Cont.)

C-Sets
A23G 1/305, A23G 2200/08;
A23G 1/305, A23G 2200/14;
A23G 3/343, A23G 2200/08;
A23G 3/343, A23G 2200/14

**Description**

**Technical Field**

The invention relates to a decor application method for food products, which is applied with a decor material that contains large food particles with characteristic aroma content, completely covers the flavoured particles and cuts off their contact with the air, and prevents aroma loss during product's shelf life.

**Background of the Related Art**

In the related art, aesthetic decoration applications can be made on food products such as chocolate, cake, biscuit. These decorations are used for colour and visually design purposes. In the related art, chocolate decorations in various colours and geometries are applied to chocolate, bars, wafers, cakes, biscuits, crackers and similar food products to provide visual appeal and aesthetics. Such decorations are applied by pouring through 1-3 mm nozzles and by means of a decorator whose movement can be programmed in two dimensions. Additionally, more regular decor motifs can be applied with the help of food jet printers. Furthermore, edible figures made of food-safe materials that have been applied on paper beforehand on smooth surfaces such as chocolate can be pasted and transferred.

In the related art, decorations can be applied by pouring them onto foods from 1 to 3 mm nozzles, depending on the viscosity and pour point properties of the chocolate. These decors can only be used for colour, liquid or powder aroma mixed into the decor and visual design purposes. However, there are no decor application methods and application examples in which high flavoured and coarse particles (up to 5 mm) are added. In current case, when large nozzle diameters are used, the aesthetic features of the decors are lost. Application methods in the current technique; It is the mixing of flavoured particles into the coating chocolate instead of the decor or pouring them onto the product surface. However, in this application volatile components of aromas of flavoured particles evaporate and get lost when having direct contact with air. When aroma particles are poured onto product surface, double stage coating operations are used to prevent aroma loss of particles. In these applications in terms of senses aroma is not felt adequately in case not being able to apply flavoured particles due to cost, product design, texture, eating quality and similar reasons. Additionally, during pouring processes, flavoured particles are crumbled due to transportation and application, oxidized due to continuous contact with air, their aroma decreases, their eating quality deteriorates because of getting moisture from the air and process wastes occur.

**Purpose of the Invention**

The application method of the invention aims to mix particles with a high aroma content (coffee, cocoa, hazelnut, walnut, almond, peanut, pistachio, orange, lemon, pineapple, etc.) up to 5 mm with liquid food materials such as chocolate, cocolin, cream, jelly, jam with oil and oil-based inputs and to apply in decor and intensively. Due to the design of the invention, decorative nozzle diameters between 5 and 15 mm can be used. Considering the type, size and ratio of flavoured particles; decor density, viscosity and pour point are adjusted by means of emulsifiers (lecithin, ammonium phosphatide, polyglycerol polyricinolate). Thus, the diameter of the decor thread is adjusted by changing the pouring height. The height of the decor apparatus developed to adjust the diameter of the decor thread can also be adjusted. Taking into account the parameters such as decor; emulsifiers, by adjusting parameters such as temperature, pressure, velocity increase due to gravity ( $V = \sqrt{2 \cdot g \cdot h}$ ) during vertical flow, and the continuity equation ( $Q = V \cdot \pi \frac{d^2}{4}$ ), by means of height change (*h*) and velocity increase (*V*), in accordance with the continuity equation of the fluid, using the change of flow diameter (*d*) between 5 and 15 mm; It is aimed to reach a decor diameter of 1 to 5 mm at the application point from the diameter nozzle.

The invention aims to feel the desired aroma locally and in high doses as a result of applying the products with high aroma and without undesired aroma loss as a decoration on the surface of the food products. The invention is also eligible for application to other food products such as cakes, biscuits, crackers, bread and the like, as well as products with chocolate and cocolin coating.

The invention also enables coating of all surfaces of the particles with the dragee method. In this way, aromatic coarse particles can be used by coating with dragee coating method before mixing with the decor material when desired. The purpose is to completely end the contact of the particles with the air, to minimize the aroma loss and oxidation, and to preserve the quality of the products throughout their shelf life.

**Brief Description of the Invention**

The invention relates to a new decoration method developed for application onto food product to prevent aroma loss and oxidization during shelf life by means of a liquid decor base containing coarse flavoured particles (dark, milk, white, coloured chocolate, liquid chocolate, cream, jelly, jam, cocolin, oil, etc.) and a product obtained with the application with decor apparatus. It has been developed as a solution to the problem that aroma losses during shelf life affect product quality with the help of specially prepared fluid decor mixtures in food materials where aromatic inputs such as coffee, cocoa, hazelnuts, peanuts and fruits are used.

The invention is a decor application method that enables the desired aromas to be felt locally and in high doses in food products and comprises process steps of homogeneously mixing the coarse particulate powder aroma with the liquid decor base in order to preserve its quality and aroma throughout the shelf life of the product; applying the decor in the desired diameter and geometry on the food product by transferring it to a decorator at the set out temperature and pressure; and then transformation into solid phase and encapsulating the aromas in that phase.

In an application of the invention said coarse particulate powder aroma is food and/or food additives up to 5 mm in size containing a distinctive flavour; an individual or combinations selected from the groups consisting, particularly, coffees, cocoas, nuts, dried fruits, fruit aromas.

In an application of the invention decor base liquid form food and/or food additives is an individual or combinations selected from a group consisting of particularly, liquid chocolate, cocolins, creams, jelly, jams, oils, oil base inputs.

In an application of the invention, the food product eligible for decor application is an individual or combinations selected from a group consisting of particularly chocolate and/or cocolin coated products, bars, wafers, crackers, cakes, biscuits, breads.

In an application of the invention, all surfaces of the coarse particulate aroma are coated with the dragee method before being mixed into the liquid decor base.

In an application of the invention, considering the type, size and ratio of large aroma particles; the decor density, viscosity and pour point are adjusted by means of an individual or combinations selected from the group consisting of emulsifiers, preferably lecithin, ammonium phosphatides, polyglycerol polyricinolate.

In an application of the invention said decorator is a food decorator which moves in the X, Y and Z axis, and include a heated manifold on which there are nozzles designed as per the decor characteristics thereon.

In an application of the invention creation of decor geometries to be applied on the product, thanks to the manifold being adjustable in the X, Y direction; Since it is adjustable in the Z direction, the diameter of the liquid decor from the nozzle and the diameter of the decor at the application point on the product are adjusted by changing the vertical distance between the nozzles and the product surface.

In an application of the invention, time adjusted needles moving up to nozzle inside by help of actuators located on each nozzle connected to said manifold are used in order to prevent clogging of the nozzles due to coarse particles.

An application of the invention contains pressure adjusted valve by pressure regulator with air bag to keep pressure inside decorator constant for flow of equal flow rate from multiple nozzles and inputs to manifold from multiple points.

In an application of the invention decor diameter is provided at the point of application of 1 to 5 mm by providing process parameters of decor temperature of 27 - 40 °C, viscosity of 1.000 - 6.000 cP, pour Point of 10 - 22 Pa, height of 50 - 600 mm, particle size of 1 - 5 mm, nozzle diameter of 5 - 15 mm, needle movement of 15 - 180 sec/movement.

In an application of the invention, after the decor application, it is cooled in a closed cooling tunnel for 10 - 15 minutes in an environment of +10 - 15 °C, under 50% relative humidity, and converted into solid phase.

The invention is a food product and comprises decor in the desired diameter and geometries, enabling feeling aromas thereon locally and in high dose, and encapsulating aroma particles up to 5mm size.

**Description of Figures**

**Figure 1:** is particulate decor process design

**Figure 2:** is decor nozzle design

**Figure 3:** is illustrative views of particulate decor product

**Brief Description of References in Figures**

(a) Tank (Main stock tank)
(b) Mixer
(c) Load cells
(ç) Pump
(d) Heated pipe
(e) Tempering machine
(f) Particle mixing mixer
(g) Particle feeding unit
(h) Homogenization tank
(i) Mono pump
(j) Pressure regulator
(k) Particulate decor input points
(m) and (n) Nozzles
(o) Pressure adjusted valve (pinch valve)
(p) Height
(q) Manifold
(r) Product
(s) Temper deforming unit
(t) Needles
(u) Particle
(v) Decor
(y) Actuator

**(d₁)** Nozzle output diameter (Decor upper diameter)
**(d₂)** Decor application point diameter (decor application diameter)

**Detailed Description of the Invention**

The invention provides application of the particles (u) such as liquid chocolate, cocolin, cream, jelly, jam and similar liquid decor base flavour encapsulated in the liquid decor base to end products (r) as high-quality decoration (v) in order to preserve the aroma quality and prevent aroma loss and oxidation throughout the shelf life. The invention provides protection of qualities of powder aroma applied products (r) during their shelf life. Powder aromas are mixed into chocolate, cocolin, cream, jelly, jam and similar materials applied for decor purpose and is applied to products (r) by method developed under the invention. Liquid chocolate, cocolin, cream, jelly, jam and similar food materials containing powder aroma particles (u), application of this material developed to preserve the quality of powder aroma throughout the shelf life of the product (r) as decor (v) on products (r), then conversion into solid phase and the aromas encapsulated in this phase provide preservation of their qualities.

An application of the invention enables mixing particles (u) with a high aroma content (coffee, cocoa, hazelnut, walnut, almond, peanut, pistachio, orange, lemon, pineapple, etc.) up to 5 mm with liquid decor base and applied as decor (v) form and intensively. Decor nozzle diameters **(d₁)** can be up to 15 mm. Considering the type, size and ratio of decor (v), flavoured particles (u) decor (v) density, viscosity, pour point are adjusted by means of emulsifiers (lecithin, ammonium phosphatide, polyglycerol polyricinolate). Chocolate comprises continued oil phase and sugar therein. Due to the lipolytic and hydrophilic effect, they do not dissolve in one another, and the surface is only covered with oil. This can be solved by using emulsifiers and the fat composition of chocolate can be reduced with the help of emulsifiers while providing the desired flow properties. Emulsifiers are substances that provide a fine dispersion of foods by reducing surface tension. Emulsifiers provide stability by reducing the free energy on the surface between the two phases and forming an adsorbed film around the droplets forming the discontinuous phase. Emulsifiers are molecules with one end of the molecule hydrophobic liking oil and the other hydrophilic liking water. They create a stable, homogeneous and lump-free emulsion by mixing oil and water. In a preferred application of the invention Lecithin and PGPR are used. When lecithin is added to chocolate, it coats the sugar crystals and affects the rheology of the chocolate by helping the sugar crystals disperse in the oil phase. When lecithin is added, the hydrophilic functional group of the lecithin attaches to the sugar surface, while the lipolytic group jumps to the surrounding oil phase. This allows the particles to slide over each other more easily and lowers the viscosity. The movements of lecithin on the sugar crystal surface were studied, and as a result, it was revealed that the adsorption of lecithin on the sugar crystal surface also has a lipolytic character, which reduces the sucrose-sucrose interactions. Lecithin and PGPR (polyglycerol polyricinoleate): Unlike lecithin, PGPR does not attach as suspension in chocolate. The continuous oil phase increases the volume fraction and the amount of bound water. This makes water unusable by hydrating the water and increasing the solid particles. The use rate of lecithin is in the range of 0.4 - 0.8% by weight. PGPR is used around 0.2 - 0.5% by weight. The method of the invention uses lecithin to reduce plastic viscosity. Movement of crystals in the liquid phase is facilitated by coating the sugar crystals in the chocolate. PGPR affects the pour point by binding the water in the chocolate. Thus, the diameter of the decor thread can be adjusted. Another tool for adjusting the diameter of the decor thread is the adjustable height (p) of the developed decor apparatus. Decor (v) can be reached at the application point from a nozzle with a diameter of 5 to 15 mm ($d_1$) by adjusting parameters such as emulsifiers, temperature, pressure, and by making use of the diameter change with height due to the gravity effect of the decor (v), which is the subject of the application, a decor diameter of 1 to 5 mm ($d_2$)

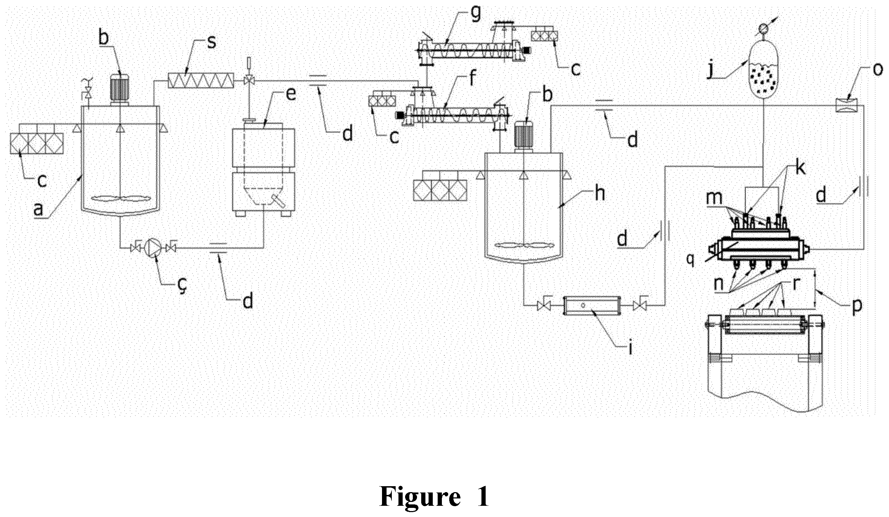

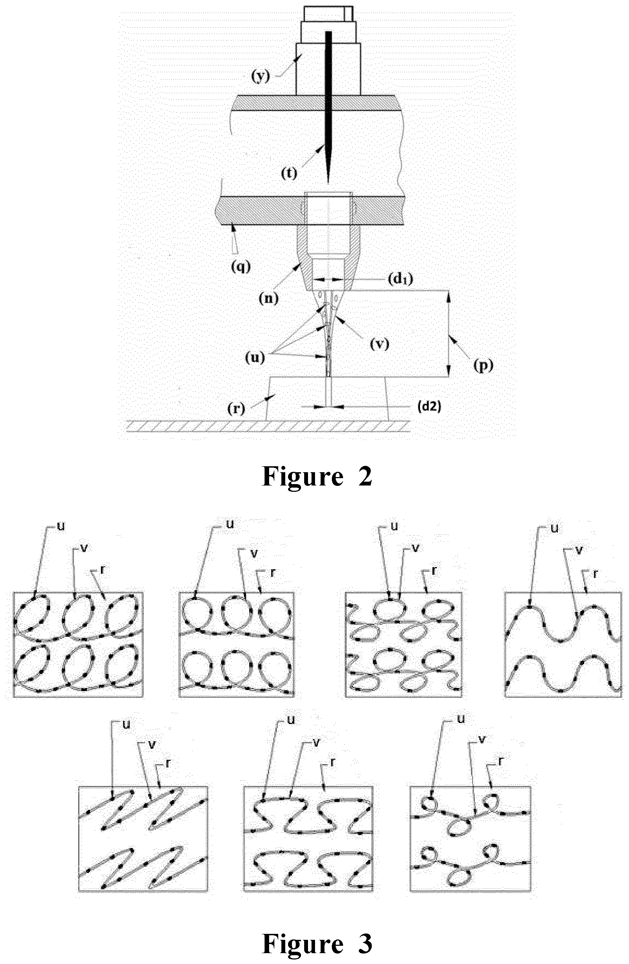

The particulate decor (v) process design, disclosed under the invention, is shown in Figure 1. Illustrative process chocolate product (r) of the invention is described specifically to provide better description of the invention. However, the decoration feature of the invention can be used for cakes, biscuits, crackers, bread, etc. and is also suitable for application to other food products (r). In the process of the invention,. decor base liquid chocolate is stocked in a main tank (a) at 45 - 50 °C and mixed continuously with a mixer (b). Chocolate stocked in the tank (a) and transferred by pump (ç) is weighed precisely by load cells (c). All chocolate pipes are designed as heated (d). Liquid chocolate is passed through tempering machine (e) and crystallized. Taking tampering temperature measurement at the output of tempering machine (e) as reference, liquid chocolate is transmitted to temper deforming unit (s) again and temperature is increased to 45 - 50°C again and returned to stock tank (a) or if tamper temperature is of desired value, transmitted to particle mixing mixer (f). Preferably coffee particles are used as aroma particles in this application. Flow rate of liquid chocolate transmitted to particle mixing mixer (f) is controlled by load cells (c) located on liquid chocolate tank (a) and particles (u) are supplied in synchronous with liquid chocolate flow rate by means of load cells (c) located on particle feeding unit (g) subject to flow rate. Liquid chocolate mixed with particles (u) of needed rate are fed into homogenizing tank (h). Particulate chocolate quantity in homogenizing tank (h) is controlled by load cells (c) located on the tank (a); all system remaining as per chocolate amount is controlled automatically. It is fed from homogenizing tank (h) to decorator nozzles (m and n) by means of a mono pump (i) and heated pipes (d) in a manner not damaging particle (u). For flow of particulate tampered liquid chocolate from multiple nozzles (m and n) at equal flow rate, an air bag pressure regulator (j) and a pressure regulating valve (pinch valve) (o) to keep the pressure in the decorator constant, and the particulate chocolate to the decorator manifold (q) inlet, input is used from multiple points (k). Pressure adjustment is made by taking into account parameters such as viscosity of particulate chocolate, decor (v) type, decor (v) thickness. For decor (v) to be applied onto products (r) of the invention a heated decor manifold (q) having nozzles (m and n) designed as per features of decor (v) thereon is used. For forming geometries of decor (v) to be applied onto the product (r), decor manifold (q) is designed in a manner allowing adjustment of its route on X and Y axis. Thus, different figures (as shown in Figure 3) can be applied by same system.

By means of the adjustment height (p) in the Z direction given to the manifold (q), the decor nozzle outlet diameter ($d_1$) and the diameter at the application point ($d_2$) of the decor material (decor base + particle aroma) are determined by the nozzles (n) by means of the "vertical free flow principle of the fluid" is adjusted by changing the vertical height (p) between the product (r) surface. In the state of art, orbit program in X and Y direction to decorators can be made. However, the new system of the invention additionally enables adjustment of height (p) of manifold (q) in Z direction (vertical). Time adjusted needles (t) moving up to inside of nozzle by means of actuators (y) located on each nozzle connected to manifold (q) are used to prevent clogging of nozzles (n) due to particles (u). Figure 2 shows actuator (y), needle (t), manifold (q), nozzle (n), nozzle outlet diameter (decor top diameter) ($d_1$), particle (u), decor (v), height (p), product (r) and the diameter at the application point of the decor (decor application diameter) ($d_2$). The height (p) of the manifold (q) is set at 50 to 600 mm, preferably 400 mm in order to adjust the decor (v). In order to perform the flow function from the nozzle, the decor (v) viscosity is set to 1,000 - 6,000 cP, preferably 2,000 - 6,000 cP, more preferably 3000 cP. The emulsifier content is preferably Lecithin 0.4% and PGPR 0.2% by weight. The pour point of the decor is set at 10 to 22 Pa, preferably 16 Pa, so that the decor flows without breaking. In order for the particulate decor to flow without clogging the nozzles (n), the nozzle diameter is set to 5 to 15 mm, preferably 6 mm. In order to prevent the clogging of nozzles, the nozzle cleaning needle (t) mechanism is set at 15-180 sec/movement, preferably 30 sec/movement. After the decor application, it is cooled in a closed cooling tunnel for 10 - 15 minutes in an environment of +10 - 15 °C, under 50% relative humidity, and crystallized. Particle size, rate, and flow properties applied depending on the temperature of the decor are given in Table 1.

Table 1. Application Conditions

| Application | Unit | Minimum Value | Preferred value | Maximum Value |
|---|---|---|---|---|
| Decor (v) Temperature | °C | 27 | 30 | 40 |
| Viscosity | Cp | 1.000 | 3.000 | 6.000 |
| Pour Point | Pa | 10 | 16 | 22 |

(continued)

| Application | Unit | Minimum Value | Preferred value | Maximum Value |
|---|---|---|---|---|
| Height | mm | 50 | 400 | 600 |
| Particle Size | mm | 1 | 2 | 5 |
| Nozzle Diameter | mm | 5 | 6 | 15 |

Decor designs obtained under the invention are shown in particle (u), decor (v) and product (r) and an illustrative view is given in Figure 3. It shows that some decor (v) types occurring as a result of movement of manifold (q) in X and Y direction on product (r) with schematic views and distribution of particles (u) in the decor (v) is shown. The said views are of illustrative nature and more different applications are also possible.

In the invention manifold height (p), viscosity and flow point are set out differently and thus new nozzle design is obtained. An application method of the invention enables mixing particles (u) with a high aroma content (coffee, cocoa, hazelnut, walnut, almond, peanut, pistachio, orange, lemon, pineapple, etc.) up to 5 mm with liquid decor base and applied as decor (v) form and intensively. Decor nozzle diameters $(d_1)$ can be up to 15 mm. Considering the type, size and ratio of decor (v), some and flavoured particles (u) decor density, viscosity, pour point are adjusted by means of emulsifiers (lecithin, ammonium phosphatide, polyglycerol polyricinolate). Thus, the diameter of the decor thread is adjusted. Another tool for adjusting the diameter of the decor thread is the adjustable height of manifold in the developed decor. Decor (v) can be reached at the application point from a nozzle with a diameter of 5 to 15 mm $(d_1)$ by adjusting parameters such as emulsifiers, temperature, pressure, and by making use of the diameter change with height due to the gravity effect of the decor (v) a decor diameter of 1 to 5 mm $(d_2)$

Method of the invention enables feeling of the desired aroma locally and in high doses as a result of applying the products (r) with high aroma and undesired aroma loss as a decor (v) on the surface of the food products.

The decor (v) and said application is convenient for cakes, biscuits, crackers, bread, etc. and other food products (r). As all surfaces of particles (u) are mixed with decor base (chocolate, cocolin, cacao oil, plant oil etc.) and coated fully, contact with air is stopped and aroma loss and oxidization are prevented.

**Claims**

1. A decor (v) application method that enables the desired aromas to be felt locally and in high doses in food products (r) **characterized by** comprising; process steps of homogeneously mixing the coarse particulate (u) powder flavour with the liquid decor base in order to preserve its quality and aroma throughout the shelf life of the product (r); applying the decor (v) in the desired diameter and geometry on the food product (r) by transferring it to a decorator at the set out temperature and pressure; and then transformation into solid phase and encapsulating the aromas in that phase.

2. The method according to claim 1 **characterized in that**; said coarse particulate (u) powder aroma being food and/or food additives up to 5mm in size containing a distinctive flavour; an individual or combinations selected from the groups consisting, particularly, coffees, cocoas, nuts, dried fruits, fruit aromas.

3. The method according to claim 1 **characterized in that**; decor base is liquid form food and/or food additives being an individual or combinations selected from a group consisting of particularly, liquid chocolate, cocolins, creams, gels, jams, oils, oil base inputs.

4. The method according to claim 1 **characterized in that**; the food product (r) eligible for decor (v) application being an individual or combinations selected from a group consisting of particularly chocolate and/or cocolin coated products, bars, wafers, crackers, cakes, biscuits, breads.

5. The method according to claim 1 **characterized in that**; coarse particulate (u) aroma all surfaces being coated by dragee method before mixing with liquid decor base.

6. The method according to claim 1 **characterized in that**; considering the type, size and ratio of coarse aroma particles; the decor (v) density, viscosity and pour point being adjusted by means of an individual or combinations selected from the group consisting of emulsifiers, preferably lecithin, ammonium phosphatides, polyglycerol polyricinolate.

7. The method according to claim 1 **characterized in that**; said decorator being a food decorator which moves in the X, Y and Z axis, and includes a heated manifold (q) on and having nozzles (m, n) designed as per the decor (v) characteristics.

8. The method according to claim 7 **characterized in that**; creation of decor (v) geometries to be applied on the product (r), thanks to the manifold (q) being adjustable in the X,Y direction; since it is adjustable in the Z direction, the diameter ($d_1$) of the liquid decor from the nozzle (n) and the diameter ($d_2$) of the decor at the application point on the product (r) being adjusted by changing the vertical distance (p) between the nozzles (n) and the product (r) surface.

9. The method according to claim 7 **characterized in that**; time adjusted needles (t) moving up to inside of nozzle (m, n) by means of actuators (y) located on each nozzle (m, n) connected to said manifold (q) being used to prevent clogging of nozzles (n) due to particulates (u).

10. The method according to claim 7 **characterized in that**; decorator comprise pressure regulator (j) with air bag that will keep pressure inside decorator constant for flow of equal flow rate from multiple nozzles (m, n), pressure adjusted valve (o) and inputs (k) to manifold (q) from multiple points.

11. The method according to any one of above claims **characterized in that**; decor diameter ($d_2$) being provided at the point of application of 1 to 5 mm by providing process parameters of decor temperature of 27 - 40 °C, viscosity of 1.000-6.000 cP, pour point of 10- 22 Pa, height (p) of 50 - 600mm, particle size of 1 - 5 mm, nozzle diameter ($d_1$) of 5 - 15mm, needle (t) movement of 15 - 180 sec/movement.

12. The method according to claim 1 **characterized in that**; after the decor application, it being cooled in a closed cooling tunnel for 10 - 15 minutes in an environment of +10 - 15 °C, under 50% relative humidity, and conve rted into solid phase.

13. A food product (r) **characterized by** comprising; decor (v) in the desired diameter and geometries, enabling feeling aromas thereon locally and in high dose, and encapsulating aroma particles (u) up to 5 mm size.

Figure 1

**Figure 2**

**Figure 3**

Europäisches
Patentamt

European
Patent Office

Office européen
des brevets

# EUROPEAN SEARCH REPORT

Application Number

EP 22 21 7246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/109754 A2 (FUJIFILM DIMATIX INC [US]; MOYNIHAN EDWARD R [US] ET AL.) 27 September 2007 (2007-09-27) | 1-5,13 | INV.<br>A23G3/28<br>A21D13/24<br>A23G3/34 |
| A | * page 3, line 4 - page 4, line 30; claims 1,7,10,15,17-21; figures * | 6-12 | A23P20/18 |
| X | US 2009/304867 A1 (RABAULT JEAN-LUC [FR] ET AL) 10 December 2009 (2009-12-10) * paragraph [0069] - paragraph [0072]; claims 1,8,10-13; example 1 * | 1-4,6, 12,13 | |
| X | US 2018/132511 A1 (HERINGLEHNER JOHANNES [DE] ET AL) 17 May 2018 (2018-05-17) | 1-4,7,8, 13 | |
| A | * paragraphs [0297] - [0302]; figures 4-7 * <br> * paragraphs [0308] - [0311] * | 9-12 | |
| X | DE 20 2011 052238 U1 (VEREG HOTEL UND RESTAURANTBETR S GMBH [AT]) 18 January 2012 (2012-01-18) * paragraph [0005] - paragraph [0006]; claim 1 * | 13 | TECHNICAL FIELDS SEARCHED (IPC)<br><br>A23G<br>A21D<br>A23P |
| X | EP 0 904 703 A2 (KATJES FASSIN GMBH & CO KG [DE]) 31 March 1999 (1999-03-31) * paragraph [0025]; claims 1,5,6; figure 1 * | 13 | |

The present search report has been drawn up for all claims

| Place of search | Date of completion of the search | Examiner |
|---|---|---|
| Munich | 2 August 2023 | Gaiser, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 7246

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2023

| Patent document cited in search report | | Publication date | Patent family member(s) | | Publication date |
|---|---|---|---|---|---|
| WO 2007109754 | A2 | 27-09-2007 | CN | 101405142 A | 08-04-2009 |
| | | | EP | 2004413 A2 | 24-12-2008 |
| | | | JP | 2009529921 A | 27-08-2009 |
| | | | KR | 20090005023 A | 12-01-2009 |
| | | | US | 2007222830 A1 | 27-09-2007 |
| | | | WO | 2007109754 A2 | 27-09-2007 |
| US 2009304867 | A1 | 10-12-2009 | AT | 495674 T | 15-02-2011 |
| | | | BR | PI0717209 A2 | 17-09-2013 |
| | | | CA | 2669243 A1 | 22-05-2008 |
| | | | CN | 101562988 A | 21-10-2009 |
| | | | CN | 103749868 A | 30-04-2014 |
| | | | DK | 2091345 T3 | 09-05-2011 |
| | | | EP | 2091345 A1 | 26-08-2009 |
| | | | ES | 2360105 T3 | 31-05-2011 |
| | | | FR | 2908599 A1 | 23-05-2008 |
| | | | PL | 2091345 T3 | 29-07-2011 |
| | | | RU | 2009120436 A | 27-12-2010 |
| | | | UA | 99446 C2 | 27-08-2012 |
| | | | US | 2009304867 A1 | 10-12-2009 |
| | | | WO | 2008059022 A1 | 22-05-2008 |
| | | | ZA | 200903392 B | 31-03-2010 |
| US 2018132511 | A1 | 17-05-2018 | EP | 3282860 A1 | 21-02-2018 |
| | | | US | 2018132511 A1 | 17-05-2018 |
| | | | US | 2021051985 A1 | 25-02-2021 |
| | | | WO | 2016166099 A1 | 20-10-2016 |
| DE 202011052238 | U1 | 18-01-2012 | NONE | | |
| EP 0904703 | A2 | 31-03-1999 | NONE | | |

EPO FORM P0459

For more details about this annex : see Official Journal of the European Patent Office, No. 12/82